# EUROPÄISCHE PATENTSCHRIFT

(11) **EP 1 629 880 B1**
(45) Veröffentlichungstag und Bekanntmachung des Hinweises auf die Patenterteilung: **18.02.2009**
(21) Anmeldenummer: 04026427.7
(22) Anmeldetag: 08.11.2004
(51) Int. Cl.: B01D 53/50

(54) **Verfahren und Sprühturm zur Kontaktierung von Gasen und Flüssigkeitstropfen für den Stoff- und/oder Wärmeaustausch**
Process and spray tower for contactacting gases and liquid droplets during mass and/or heat transfer
Procédé et colonne de pulvérisation pour contacter gaz et gouttelettes liquides pendant l' échange de masse ou/et de chaleur

(43) Veröffentlichungstag der Anmeldung: 01.03.2006
(73) Patentinhaber: Austrian Energy & Environment AG & Co KG, 8074 Raaba (AT)
(72) Erfinder: Maier, Hermann, Dipl.-Ing. Dr., 8010 Graz (AT); Wurzinger, Rainer, 8047 Graz (AT)
(74) Vertreter: VA TECH Patente GmbH & Co

(56) Entgegenhaltungen:
- EP-A- 1 018 360
- DE-C1- 10 058 548
- JP-A- 55 092 125
- US-A- 4 266 951
- US-A- 4 968 335
- US-A- 5 250 267
- US-A- 5 558 818
- US-A- 5 648 022
- W.F. GOHARA, ET AL: "New Perspective of Wet Scrubber Fluid Mechanics in an Advanced Tower Design" INTERNET ARTICLE, [Online] 25. August 1997 (1997-08-25), - 29. August 1997 (1997-08-29) Seiten 1-6, XP002324490 Gefunden im Internet: URL:http://www.babcock.com/pgg/tt/pdf/BR-1 640.pdf> [gefunden am 2005-04-12]

## Beschreibung

Die Erfindung betrifft ein Verfahren zur Kontaktierung von Gasen und Flüssigkeitstropfen für den Stoff- und/oder Wärmeaustausch in einem Sprühturm, in welchem in mehreren Ebenen Flüssigkeit im Gegenstrom zum Gas eingedüst wird, wobei das Gas durch genau zwei Eintrittsöffnungen im Mantel des Sprühturmes zugeführt wird, sowie einen entsprechenden Sprühturm.

Die Erfindung kann angewendet werden in Sprühtürmen
* zum Stoffaustausch zwischen Gasen und Flüssigkeit (Absorption, Desorption), z.B. zur Absorption von Schadstoffen aus Abgasen, etwa zur Rauchgasentschwefelung (offene Sprühwäscher) aus sauren Abgasen von Verbrennungsprozessen im industriellen Bereich, Kraftwerken oder Müllverbrennungsanlagen, oder
* zur Gaskonditionierung, Gasfeuchtesättigung bzw. Gasabkühlung, insbesondere von Rauchgasen.

Es handelt sich dabei um ein Verfahren, bei dem Waschflüssigkeit bzw. Wasser als Tropfen in den zumeist heißen Gasstrom eingedüst werden. Die Erfindung ist anwendbar für übliche Rauchgaszusammensetzungen bzw. typische Temperaturen um die 200°C.

Bei dem am meisten eingesetzten Verfahren handelt es sich um das Nasswäscheverfahren auf Basis einer wässrigen Kalkstein-Gips-Suspension. Dabei wird eine Suspension aus Wasser, Gips und Kalkstein als Waschflüssigkeit verwendet. Der Feststoffgehalt der Suspension beträgt in der Regel 10 Gew.-%. Er besteht zu überwiegendem Teil aus Gips und einem Kalksteingehalt zwischen 2-3 Gew.-% im Feststoff, das als Absorbens dient. In der Literatur findet sich ein Überblick für dieses Verfahren bei Soud H. N., Takeshita M., FGD handbook, IEA Coal Research, London, 1994. Eine aktuellere Zusammenfassung über Rauchgasentschwefelungsverfahren ist bei DTI, Flue gas Desulphurisation (FGD) Technologies, Technology Status Report 012, http://www.dti.gov.uk/ent/coal, 03/2000 zu finden.

Für die Absorption wird üblicherweise das Apparatekonzept des offenen Sprühturms eingesetzt. Dabei wird Gas in den Sprühturm, der nach dem letzten Stand der Technik einen runden Querschnitt aufweist, im unteren Bereich der Kontaktzone eingebracht und nach oben durch die Waschzone geführt. Die Kontaktzone ― im Fall der Entschwefelung Absorberteil genannt - ist mit Sprühebenen ― Verrohrungen auf unterschiedlichen Höhen, an deren Enden Sprühdüsen sitzen ― ausgestattet und liegt zwischen Sumpfoberfläche und oberster Sprühebene. Im Gegenstrom dazu wird die Waschflüssigkeit in Form von Tropfen über verschiedene Sprühebenen in den aufsteigenden Gasstrom eingedüst und nach dem Passieren des Rauchgases im darunter liegenden Wäschersumpf gesammelt. Die Umwälzung des Flüssigstroms erfolgt dabei durch Umwälzpumpen, die die Suspension vom Wäschersumpf auf die Höhe der Sprühebenen fördert.

In den meisten Sprühtürmen wird dabei Rauchgas durch einen Rauchgaskanal seitlich und radial im unteren Bereich der Kontaktzone des Absorbers eingebracht. Die einzige Eintrittsöffnung weist eine Querschnittsfläche auf, sodass die Eintrittsgeschwindigkeit bei maximalem Rauchgasstrom im Bereich von 15 m/s liegt.

Die Flüssigkeit wird durch Einstoffdüsen zerstäubt und der Großteil der Tropfen führt, bis zur Deposition an der Wäscherwand oder im Sumpf, eine Fallbewegung im Gegenstrom zum Gas durch.

Die daraus resultierende Wechselwirkung zwischen Gas und dispergierter Flüssigkeit ergibt im Betrieb eine mehrphasige Strömung, die sich maßgeblich auf den Stoff- und/oder Wärmetransport zwischen den Phasen auswirkt. Im Fall der SO₂-Absorption wird dadurch die Abscheideleistung des Schadstoffes aus dem Rauchgas - bzw. für die Gaskonditionierung die Effizienz der Rauchgassättigung - bestimmt. Ein wesentlicher Parameter ist hier die Verweilzeitverteilung des Gases in der Kontaktzone. Sie bestimmt die durchschnittliche Kontaktdauer des Gases mit der Waschflüssigkeit.

Im Gegensatz zur idealen Strömung, die bei der verfahrenstechnischen Auslegung vorausgesetzt wird, liegt im realen Sprühturm keine gleichmäßige Aufwärts- bzw. Axialgeschwindigkeit für das Gas vor. Das heißt, dass sich im Querschnitt des Sprühturmes unterschiedliche Axialgeschwindigkeiten ausbilden, die signifikant von der Durchschnittsgeschwindigkeit abweichen können.

Vor allem in Sprühtürmen industriellen Maßstabs beeinflusst die Gasverweilzeit die Funktion des Apparats. Eine ungleiche Gasverteilung in der Kontaktzone führt zu einer unregelmäßigen Kontaktdauer zwischen den Phasen. Die Auswirkung ist ein reduzierter oder unausgeglichener Stoffaustausch im Sprühturmquerschnitt, der bei der Rauchgasentschwefelung als lokal hohe SO₂-Restkonzentrationen im Reingas wieder gefunden werden kann. In der Anwendung für die Rauchgaskonditionierung führt es zur Bildung von Gassträhnen im konditionierten Rauchgas, die noch erhöhte Temperatur aufweisen. Sie können nachfolgende hitzeempfindliche Apparate schädigen oder in ihrer Funktion beeinträchtigen.

Die Gasverweilzeit wird zum einen durch die Art und Weise der Tropfeneindüsung bestimmt. Eine nicht einheitliche Bedüsung mit Waschflüssigkeit führt im Sprühturmquerschnitt zu einem unterschiedlichen Strömungswiderstand, der das Gas veranlasst, in Bereiche mit geringerem Druckverlust auszuweichen. Als Folge ist für diese Gasteilströme auch die Wechselwirkung mit der eingedüsten Flüssigkeit geringer.

Als zweiter wichtiger Faktor muss die Art der Einbringung des Gases in die Kontaktzone betrachtet werden. Besonders bei Wäschern mit großem Durchmesser wirkt sich zunehmend die notwendige Querbewegung des Gases in der Kontaktzone aus, die zu einer gleichmäßigen Gasbeschickung im Sprühturmquerschnitt notwendig ist. Das Verhältnis zwischen Sprühturm-Durchmesser D und Höhe der Kontaktzone H bewegt sich im Normalfall zwischen D/H = 0,40-1,10.

In konventionellen Sprühwäschern erfolgt die Einbringung des Gasstromes durch einen rechteckigen Eintritt in den Sprühwäscher mit runder Grundfläche. Die Krümmung des Wäschers verursacht, dass Gasschichten an den Seitenwänden des einmündenden Gaskanals länger horizontal geführt werden als jene in der Mitte. Damit kann der Gasstrom in der Mitte des Eintritts früher in eine Aufwärtsbewegung übergehen als in den Randzonen. Die Teile des Gasstroms am seitlichen Rand des Eintritts dringen weiter in den Wäscher vor und verstärken den Effekt, der im Anlagenbau als "Randgängigkeit" des Sprühturmes bezeichnet wird. Dabei handelt es sich um den geringeren Gehalt an Waschflüssigkeit in der Wandzone aufgrund von Deposition der Tropfen aus wandnahen Düsen an der Apparatewand. Der Wäscherinnenbereich weist hingegen einen höheren Flüssgkeitsvolumsphasenanteil auf, da Tropfen sich dort länger auf einer Flugbahn durch die Kontaktzone bewegen können, bevor sie im Wäschersumpf deponieren.

In Kombination mit erhöhten Gasgeschwindigkeiten an der Wand des Sprühturmes ist in diesen Bereichen der Abscheidegrad merkbar verschlechtert und in lokal erhöhten SO₂₋Restkonzentrationen im gereinigten Gas feststellbar. In kleineren Apparaten kann es sogar zu Staupunktströmungen an der Sprühturmwand kommen, bei der durch die Umlenkung unerwünschte erhöhte Gasaufwärtsgeschwindigkeiten an der Sprühturmwand entstehen können.

Im weiteren wird durch die Gasströmung des konventionellen radialen Eintritts im Querschnitt ein Ausgleichswirbel induziert. Die turbulente Strömung führt zur Verringerung der im Gas enthaltenen kinetischen Energie. Die durch die Turbulenz erfolgende Dissipation findet in einem Bereich statt, wo im Zweiphasenzustand auch der Strömungswiderstand durch Flüssigkeitstropfen am größten ist. Die Gasbewegung wird in einem Bereich unerwünscht verlangsamt, in dem das Gas bereits einen längeren Weg durch die Kontaktzone zurückgelegt hat. Außerdem erfährt dort das Gas einen erhöhten Widerstand durch einen höheren Volumsphasenanteil von Tropfen und es besteht während des Betriebs zusätzlich die Tendenz des Gases nach außen auszuweichen. Es erfolgt im horizontalen Querschnitt des Sprühturmes zwangsläufig eine unregelmäßige Kontaktdauer mit der dispersen Waschflüssigkeit und den bereits genannten Folgen für den Stoffaustausch.

Ähnliche Probleme ergeben sich auch beim Sprühturm der DE 100 58 548 C1, wo das Gas durch zwei getrennte gegenüberliegende Gaskanäle tangential in den Sprühturm eingebracht wird. Dort stellt sich eine horizontale Zirkulationsströmung im unteren Bereich der Absorptionszone ein.

Die JP 55 092125 A beschreibt eine Vorrichtung zum Kontaktieren von Gas mit Flüssigkeit, in welcher in mehreren Ebenen Flüssigkeit im Gegenstrom zum Gas eingedüst wird, wobei das Gas durch genau zwei Eintrittsöffnungen im Mantel der Vorrichtung zugeführt wird. Jeweils eine Wand jedes zu den Eintrittsöffnungen führenden Kanals bildet eine Tangente an den Umfang des Kontaktierungszylinders der Vorrichtung, sodass das Gas im wesentlichen tangential in den Kontaktierungszylinder eingeführt wird.

Eine Aufgabe der Erfindung ist daher, die Unterschiede in der Kontaktdauer zu verringern und das eintretende Rauchgas überwiegend in den Wäscherinnenbereich mit höherem Waschflüssigkeitsanteil zu lenken.

Die Aufgabe wird durch ein Verfahren gemäß Anspruch 1 bzw. durch eine Vorrichtung nach Anspruch 4 gelöst.

Bei der Erfindung wird der Abschnitt, in der das Gas an der gekrümmten Wäscherwand verläuft, minimiert und so die längere Horizontalbewegung des Gases an der Sprühturmwand verringert. Es wird somit die Randgängigkeit verringert.

Zusätzlich wird die Gasströmung stärker in den Innenbereich des Sprühturms zu jenen Zonen mit höherem Flüssigkeitsanteil gelenkt. Es erfolgt eine intensivere Wechselwirkung von noch ungereinigtem bzw. unkonditioniertem Rauchgas mit der Flüssigkeit im Innenbereich der Kontaktzone, wo auch ein höherer Volumsphasenanteil der Flüssigkeit vorliegt.

Schließlich induziert die Gaseinströmung einen Horizontalwirbel in den Sprühturm, bei der das Gas, das noch erhöhte kinetische Energie aufweist, erst nach Passieren des stärker mit Tropfen beaufschlagten Sprühturmzentrums in die empfindlichere Wandzone des Sprühturms vordringen kann. Damit erhöht sich die Wechselwirkung zwischen den Phasenanteilen, was auch eine Verbesserung des Stoffaustausches zur Folge hat. Die Verweilzeit des Gases in der Kontaktzone wird durch die induzierte Horizontalbewegung verbessert. Die Erfindung ermöglicht somit eine effizientere Einbringung des Gases in Sprühtürmen.

Als ein weiterer Vorteil ist zu nennen, dass die Eintrittsgeschwindigkeit des Gases erhöht werden kann, ohne der Gefahr Staupunktströmungen an der Wand zu erzeugen, da der Anteil des Gasstroms mit den höchsten Horizontalgeschwindigkeiten in den Sprühturminnenbereich gerichtet ist.

Bei dem Merkmal, dass sich die Strömungsrichtungen der zwei Gasströme (an den Eintrittsöffnungen) in ihrer Verlängerung innerhalb des Sprühturmes schneiden, wird auf den Mittelpunkt der Strömung abgestellt. Als besonders bevorzugt zum Erreichen des erfindungsgemäßen Effekts hat sich eine Lage des Schnittpunktes im Zentrum des Sprühturmes bis einen halben Sprühturm-Radius hinter dem Zentrum des Sprühturmes (in Strömungsrichtung gesehen) herausgestellt.

In Kombination mit der horizontalen Einbringung des Gases besteht hier der Vorteil, eine möglichst große Gaseindringtiefe zu erzielen. Somit wird eine gleichmäßigere Gasverteilung in Sprühtürmen mit großem Durchmesser ermöglicht.

Der Winkel zwischen den Symmetrieachsen der Gaseintritte liegt im Bereich von 45° bis 120°, der je nach Sprühturmgröße angepasst wird. Durch Anpassung des Winkels zwischen den Gaseintritten und der Gaseintrittsgeschwindigkeit kann die Eindringtiefe des Gasstromes auf die Wäschergröße bzw. dem Wäscherdurchmesser abgestimmt werden.

Im Falle von Sprühtürmen mit kleinerem Durchmesser wird der Winkel erhöht und es gibt eine Wechselwirkung der Teilgasströme miteinander, die selbst bei höherer Gaseintrittsgeschwindigkeit eine Verringerung der Horizontalgasgeschwindigkeit bzw. der Eindringtiefe in den Sprühturm bewirkt. Das Risiko von unerwünschten Staupunktströmungen an der Wand des Sprühturmes wird so zumindest minimiert, im Normalfall aber ganz vermieden.

Je größer der Durchmesser des Sprühturms, desto kleiner der Winkel zwischen den Eintritten und desto höher wird die Eintrittsgeschwindigkeit gewählt. Die flüssige Dispersphase verursacht durch - je nach geforderter Abscheidungsleistung - unterschiedliche Volumsströme und verschiedene Gas-Flüssigkeitsverhältnisse (L/G-Verhältnisse) während des Betriebs einen unterschiedlichen Strömungswiderstand.

Daraus folgend kann die Einströmfläche des Gaseintritts ebenfalls verkleinert werden. Außerdem weisen die Mündungsquerschnitte der Eintrittsöffnungen zusammen eine geringere Krümmung an der Wäscherwand auf (bzw. beanspruchen einen geringeren Winkel) als der entsprechende Mündungsquerschnitt einer einzigen Eintrittsöffnung. Aus diesen Gründen können bau- und kostentechnisch Einsparungen gegenüber der konventionellen Bauweise erzielt werden, etwa sind durch die geringere durchgehende Mündungsbreite bei gleicher Eintrittsfläche geringere statische Abstützungen in den Eintrittsöffnungen (Unterstützungskonstruktionen) notwendig.

Als Eintrittsgeschwindigkeit ist ein Bereich von 10 ― 25 m/s, insbesondere ein Bereich von 14 bis 16 m/s, im Eintrittsquerschnitt vorteilhaft. Im Normalbetrieb weisen die Eintrittsgeschwindigkeiten bzw. Gasvolumsströme am Eintritt in den Sprühturm nur einen geringen Unterschied auf. Der Geschwindigkeitsunterschied zwischen den Einzeleintritten kann aber auch bis zu 50% betragen, ohne dass das erfindungsgemäße Verfahren beeinträchtigt wird.

Die Erfindung betrifft Sprühturme mit großen Querschnitten, nämlich für Sprühturm-Durchmesser größer gleich 12m, insbesondere größer als 20m, da sich hier die eingangs erläuterten Probleme besonders bemerkbar machen.

Die Erfindung wird durch ein Ausführungsbeispiel anhand der Figuren 1 bis 8 beispielhaft erläutert:
Fig. 1 zeigt einen Sprühturm gemäß Stand der Technik,
Fig. 2 zeigt eine Skizze der Gaseintritte eines erfindungsgemäßen Sprühturmes,
Fig. 3 zeigt die Ansicht eines erfindungsgemäßen (links) und eines konventionellen (rechts) Sprühturmes,
Fig. 4 zeigt den Grundriss eines erfindungsgemäßen (rechts) und eines konventionellen (links) Sprühturmes,
Fig. 5 zeigt das Einströmverhalten eines konventionellen Sprühturmes in der Ebene des Gaseintritts,
Fig. 6 zeigt das Einströmverhalten eines konventionellen Sprühturmes im Längsschnitt des Gaseintritts
Fig. 7 zeigt das Einströmverhalten eines erfindungsgemäßen Sprühturmes in der Ebene des Gaseintritts,
Fig. 8 zeigt das Einströmverhalten eines erfindungsgemäßen Sprühturmes im Längsschnitt.

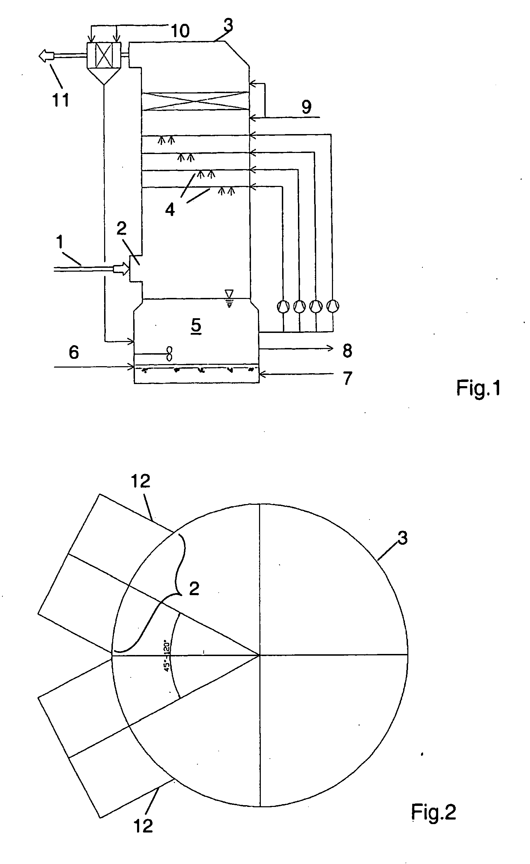

In Fig. 1 ist ein herkömmlicher offener Sprühturm mit einer einzigen radialen Gaseinbringung zur Rauchgasentschwefelung dargestellt. Der Sprühturm weist eine kreisförmige Grundfläche und einen zylindrischen Mantel auf. Das Rohgas 1 tritt durch eine einzige Eintrittsöffnung 2 horizontal in den Kontaktbereich des Sprühturms 3 ein. Im Sprühturm wird aus Sprühdüsen 4 Suspension eingedüst, die sich im Wäschersumpf 5 sammelt. Dieser wird mittels Oxidationsluft 6 begast. Aus dem Sumpf 5 wird einerseits ein Teil der Suspension wieder über Umwälzpumpen in die Sprühdüsen 4 geleitet, andererseits überschüssige Suspension über Leitung 8 zum Hydrozyklon abgezogen. Weiters wird dem Sumpf 5 Frischsuspension 7 zugeführt. Oberhalb der Sprühdüsen wird das Gas mit Spülwasser 9 gereinigt, ebenso nach dem Austritt aus dem Sprühturm 3 durch Spülwasser 10, bevor es als Reingas 11 abgezogen wird.

Der erfindungsgemäße Sprühturm gemäß Fig. 2 unterscheidet sich vom Sprühturm in Fig. 1 dadurch, dass er über zwei separate Gaskanäle 12 verfügt, welche jeweils in eine Eintrittsöffnung 2 münden. Die Symmetrieachsen der Gaskanäle schließen hier einen Winkel von etwa 55° ein. Der hier dargestellte Großsprühturm ist für einen Rauchgasdurchsatz von 4.75 Mio Nm³/h feucht konzipiert und weist einen Durchmesser von 23,6 m auf. Die Anzahl der Abstützungssäulen im Eintritt konnte um 50% im Vergleich zur herkömmlichen Bauweise mit einem Eintritt verringert werden. Der hier gezeigte Sprühturm weist zwei gleich große Gaskanäle 12 auf. Die Erfindung kann natürlich auch auf zwei oder mehrere unterschiedlich dimensionierte Gaskanäle angewendet werden.

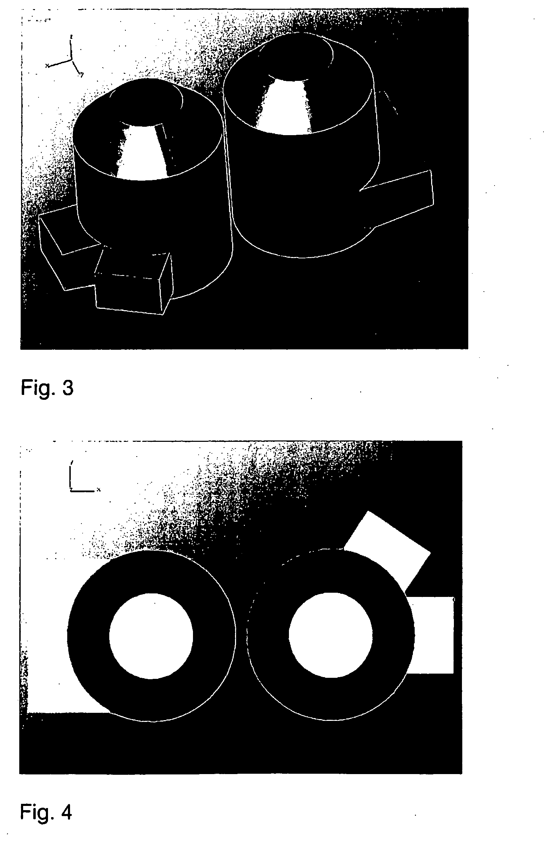

In Fig. 3 ist links ein erfindungsgemäßer und rechts ein konventioneller Sprühturm dargestellt. In Fig. 4 ist rechts ein erfindungsgemäßer und links ein konventioneller Sprühturm dargestellt. Der jeweils zylindrische Mantel wird durch einen Kegelstumpfförmigen Teil nach oben abgeschlossen. Die Gaskanäle haben in beiden Fällen einen rechteckigen Querschnitt. Zwischen den Eintrittsöffnungen des erfindungsgemäßen Sprühturms ist ein Stück Mantel des Sprühturms dargestellt, das die beiden Eintrittsöffnungen voneinander trennt.

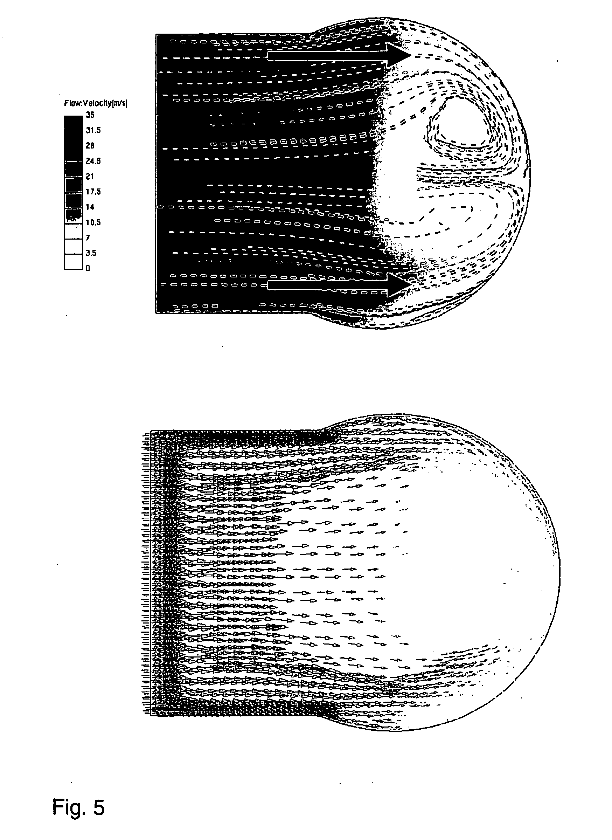

In Fig. 5 ist ein horizontaler Schnitt durch einen konventionellen Sprühturm in halber Höhe des Gaskanals 12 bzw. der Eintrittsöffnung 2 gezeigt. Und zwar geben in der oberen Abbildung die strichlierten Linien die Stromlinien der Gasströmung an, der Grauton des Hintergrunds ist ein Maß für die Geschwindigkeit des Gases. Am linken Bildrand ist eine Skala, welche die Farbzuordnung der einzeln Graustufen zu konkreten Geschwindigkeiten wiedergibt. Die dicken schwarzen Pfeile markieren Bereiche mit höchster Horzontalgeschwindigkeit. Das Gas strömt von links in den Sprühturm ein.

In der unteren Abbildung ist die Gasströmung als Vektorbild dargestellt. Die Größe und die Richtung der einzelnen Vektoren ist ein Maß für Betrag und Richtung der Gasströmung in diesem Punkt.

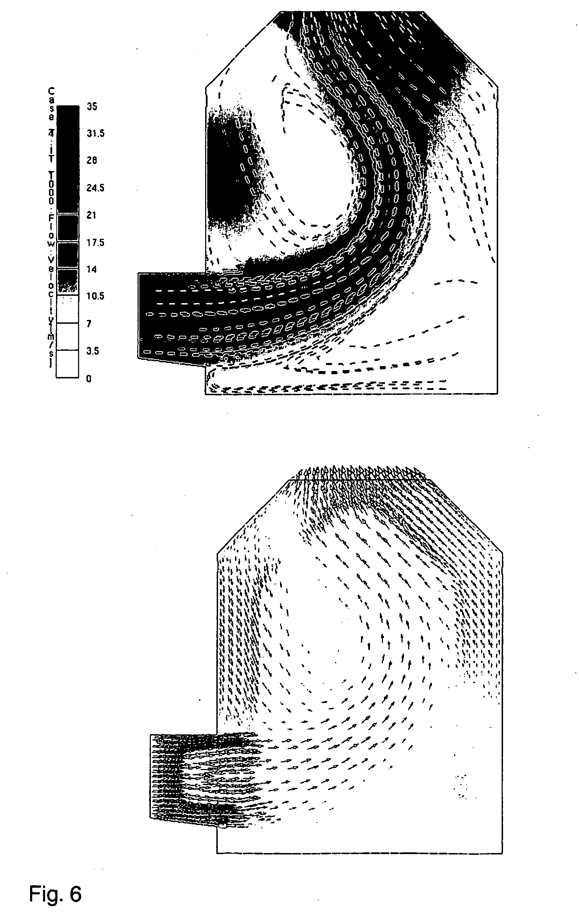

In Fig. 6 ist ein Längsschnitt in der Symmetrieebene des Sprühturms (also durch die Mitte des Gaskanals) dargestellt. Die strichlierten Linien der oberen Abbildung geben wieder die Stromlinien der Gasströmung an, der Grauton des Hintergrunds ist ein Maß für die Geschwindigkeit des Gases, für die wieder links die Skala mit der Zuordnung zu konkreten Geschwindigkeitswerten gegeben ist.

In der unteren Abbildung ist die Gasströmung als Vektorbild dargestellt. Die Größe und die Richtung der einzelnen Vektoren ist ein Maß für Betrag und Richtung der Gasströmung in diesem Punkt.

Aus den beiden Fig. 5 und 6 ist ersichtlich, dass durch die Krümmung des Sprühturms die Gasschichten an den Seitenwänden des einmündenden Gaskanals länger horizontal geführt werden als jene in der Mitte (Fig. 5). Damit kann der Gasstrom in der Mitte der Eintrittsöffnung früher in eine Aufwärtsbewegung übergehen als in den Randzonen (Fig. 6). Die Teile des Gasstroms am seitlichen Rand der Eintrittsöffnung dringen weiter in den Sprühturm vor und verstärken den Effekt der "Randgängigkeit" wie bereits eingangs erläutert.

In Fig. 5 ist der durch die Gasströmung des konventionellen radialen Eintritts im Querschnitt induzierte Ausgleichswirbel zu erkennen. Die Gasbewegung ist dort eindeutig verlangsamt.

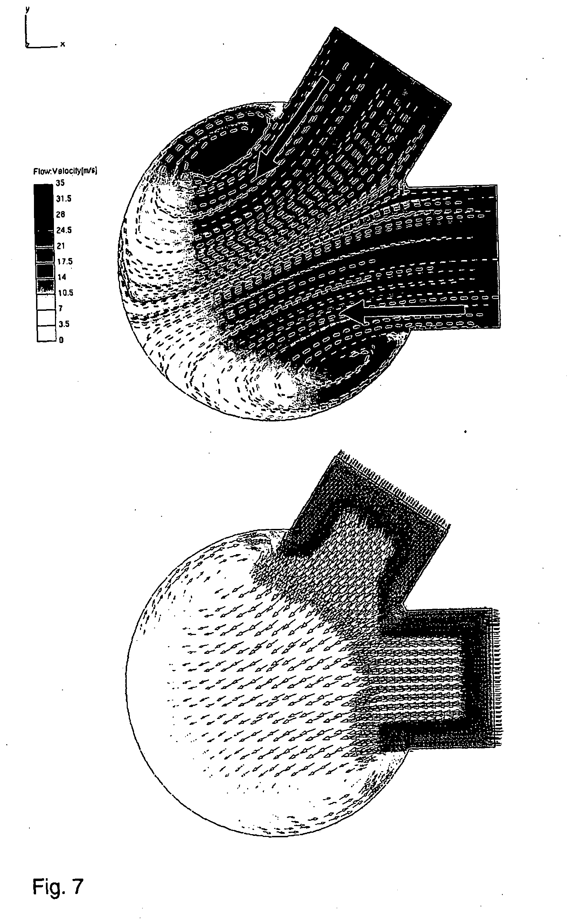

In Fig. 7 ist ein horizontaler Schnitt durch einen erfindungsgemäßen Sprühturm in halber Höhe des Gaskanals 12 bzw. der Eintrittsöffnungen 2 gezeigt. Und zwar geben in der oberen Abbildung die strichlierten Linien wieder die Stromlinien der Gasströmung an, der Grauton des Hintergrunds ist wieder ein Maß für die Geschwindigkeit des Gases mit einer entsprechenden Skala am linken Bildrand. Die dicken schwarzen Pfeile markieren Bereiche mit höchster Horizontalgeschwindigkeit. Das Gas strömt von rechts bzw. rechts oben in den Sprühturm ein. In der unteren Abbildung ist die Gasströmung als Vektorbild dargestellt. Die Größe und die Richtung der einzelnen Vektoren ist ein Maß für Betrag und Richtung der Gasströmung in diesem Punkt.

Die Gasströmung wird stärker in den Innenbereich des Sprühturms zu jenen Zonen mit höherem Flüssigkeitsanteil gelenkt und die Randströmung gelangt erst danach in die Wandbereiche des Sprühturms neben den Eintrittsöffnungen. Es entstehen zwei Horizontalwirbel, bei denen das Gas, das noch erhöhte kinetische Energie aufweist, erst nach Passieren des stärker mit Tropfen beaufschlagten Sprühturmzentrums in die empfindlichere Wandzone des Sprühturms vordringen kann. Die Verweilzeit des Gases in der Kontaktzone wird durch diese Horizontalbewegung verbessert.

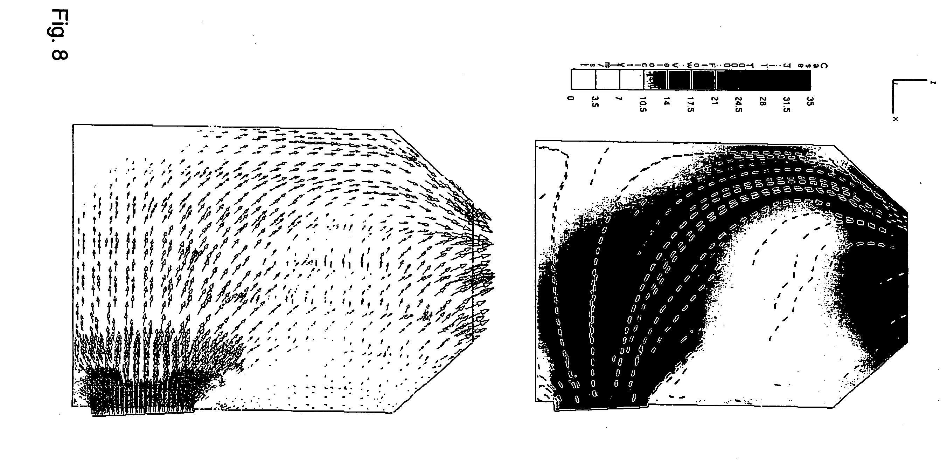

In Fig. 8 ist oben ein Längsschnitt dargestellt, der durch das Zentrum des Sprühturmes und die Symmetrieachse eines Gaskanals gelegt ist. Es ist zu erkennen, dass die Gasströmung den unteren Bereich des Sprühturmes mit relativ gleich verteilter Geschwindigkeit durchströmt, wobei die Gasströmung tiefer in den Sprühturm eindringt als bei der konventionellen Gaszuführung mit einem Gaskanal (Fig. 6). Der den Eintrittsöffnungen gegenüberliegende Raum mit sehr niedrigen Geschwindigkeiten ist im Vergleich zur konventionellen Gaszuführung deutlich verringert. Ebenso wurde der vertikale Wirbel oberhalb der Eintrittsöffnung in Fig. 6, der ebenfalls sehr niedrige Geschwindigkeiten aufweist, zum Verschwinden gebracht.

Die Überprüfung der Erfindung erfolgte mittels numerischer Strömungsberechnung (Computational Fluid Dynamics - CFD). Damit ist es möglich neben einphasigen Strömungen auch mehrphasige Strömungszustände im Sprühturm rechnerisch am Computer abzubilden und in Folge zu optimieren. Eine experimentelle Messung des Strömungsverlaufs ist in Großanlagen nur eingeschränkt oder indirekt (z.B. über Temperatur- oder Konzentrationsprofile nach der Kontaktzone) möglich. Dagegen ermöglicht die Strömungsberechnung die Visualisierung der im Apparat vorliegenden dreidimensionalen Strömung.

Für die Simulationen kam das kommerzielle CFD-Softwarepaket AVL FIRE v7.3 (siehe AVL, Fire Manual Version 7, Graz, 2001) zum Einsatz, das sich für die numerische Untersuchung derartiger ein- und mehrphasiger Strömungsvorgänge sehr gut bewährt hat und in vielen Bereichen seine Anwendung findet.

Die numerische Lösung der kontinuierlichen Gasströmung im Sprühturm wurde nach dem Finite-Volumina-Verfahren durchgeführt. Dazu wurde von dem zu untersuchenden Sprühturm ein dreidimensionales numerisches Netzgittermodell erstellt, das die Unterteilung des gesamten zu betrachtenden Raumvolumens in einzelne Volumselemente festlegt, die als Kontrollvolumina bezeichnet werden. In jedem dieser Volumselemente werden Modelle von physikalischen und eventuell chemischen Vorgängen gelöst. Die zeitliche und räumliche Änderung von Wärme- und Massenflüssen in einem Kontrollvolumen wird über dessen Seitenflächen bilanziert. Je genauer ein untersuchter Strömungsbereich aufgelöst wird - sprich je höher die Anzahl der verwendeten Volumselemente gewählt wird - umso genauer wird in der Regel die Berechnung des Strömungsfeldes. Die einphasige Gasströmung wird bis zum Erreichen des stationären Strömungszustandes berechnet.

In die stationäre Lösung der einphasigen Gasströmung werden Modelltropfen, die die Waschsuspension repräsentieren, an den vorgesehen Eindüsstellen mit definierten Eigenschaften eingebracht. Die Berechnung der Flugbahnen der Tropfen in der Gasströmung erfolgt nach dem Prinzip von Euler-Lagrange bzw. Discrete Droplet Method (DDM, siehe AVL, Fire Manual Version 7, Graz, 2001 bzw. Crowe C., Sommerfeld M., Tsuji Y., Multiphase flows with droplets and particles, CRC Press, Boco Raton, 1998). Dabei wird die Bewegung der physikalischen Partikel von einer statistischen Anzahl numerischer Modellpartikel durchgeführt. Jedes Modellpartikel steht für eine bestimmte Anzahl wirklicher Partikel, die die gleichen physikalischen Eigenschaften besitzen (Paketfaktor). Die Bilanzierung der Erhaltungssätze für Masse, Energie und Impuls zwischen den Phasen erfolgt durch Multiplikation mit dem Paketfaktor.

Die Wechselwirkung zwischen Gas und dispergierter Flüssigkeit erfolgt nach dem Prinzip des Two Way Coupling. Nach Erreichen einer quasistationären Lösung für die mehrphasige Strömung für einen Betriebspunkt kann das berechnete Strömungsfeld der Gasphase sowie die Partikelbewegung dreidimensional am Computer untersucht werden.

Das Softwaresystem wurde speziell für diese Applikation parametrisiert. Die Validierung erfolgte mit experimentellen Messungen der SO₂-Abscheidung aus industriellen Großwäschern ähnlicher Bauart bzw. Baugröße bzw. durch strömungstechnische Untersuchungen in Versuchsanlagen (siehe auch Maier H., Integration der SO2-Chemisorption in die numerische 3D-Strömungssimulation von Rauchgaswäschern, Dissertation, TU Graz, 2003; bzw. Wieltsch U., Experimentelle und numerische Untersuchung des zweiphasigen Strömungszustandes in Sprühwäschern, Dissertation, TU Graz, 1999).

### Bezugszeichenliste:

- 1: Rohgas
- 2: Eintrittsöffnung
- 3: Sprühturm
- 4: Sprühdüsen
- 5: Wäschersumpf
- 6: Oxidationsluft
- 7: Frischsuspension
- 8: Leitung zum Hydrozyklon
- 9: Spülwasser
- 10: Spülwasser
- 11: Reingas
- 12: Gaskanal

## Patentansprüche

1. Verfahren zur Kontaktierung von Gasen und Flüssigkeitstropfen für den Stoff- und/oder Wärmeaustausch in einem Sprühturm (3), in welchem in mehreren Ebenen Flüssigkeit im Gegenstrom zum Gas (1) eingedüst wird, wobei das Gas durch genan zwei Eintrittsöffnungen (2) im Mantel des Sprühturmes (3) zugeführt wird, wobei die Strömungsrichtung des Gases an den Eintrittsöffnungen (2) so in den Innenbereich des Sprühturmes, der einen Durchmesser von größer gleich 12m, insbesondere größer 20m, besitzt, weist, dass sich die Strömungsrichtungen der genan zwei Gasströme (1) in ihrer Verlängerung innerhalb des Sprühturmes schneiden, insbesondere im Zentrum des Sprühturmes bis einen halben Sprühturm-Radius hinter dem Zentrum des Sprühturmes, wobei der Winkel zwischen den beiden Gasströmen beim Eintritt zwischen 45° und 120° beträgt.

2. Verfahren nach Anspruch 1, **dadurch gekennzeichnet, dass** das Gas horizontal eingebracht wird.

3. Verfahren nach Anspruch 1 oder 2, **dadurch gekennzeichnet, dass** das Gas mit einer Geschwindigkeit zwischen 10 und 25 m/s, insbesondere zwischen 14 und 16 m/s eingebracht wird.

4. Sprühturm (3) zur Kontaktierung von Gasen und Flüssigkeitstropfen für den Stoff- und/oder Wärmeaustausch umfassend Einrichtungen zum Eindüsen von Flüssigkeit in mehreren Ebenen im Gegenstrom zum Gas, genan zwei Eintrittsöffnungen (2) im Mantel des Sprühturmes zum Zuführen von Gas (1) und genan zwei Gaskanäle (12), wobei jeweils ein Gaskanal in eine Eintrittsöffnung (2) mündet, und wobei die zu den Eintrittsöffnungen (2) führenden Gaskanäle (12) so angeordnet sind, dass die Strömungsrichtung des Gases (1) an der Eintrittsöffnung radial in den Innenbereich des Sprühturmes (3), der einen Durchmesser von größer gleich 12m, insbesondere größer 20m, besitzt, weist, nämlich dass sich die Strömungsrichtungen der genan zwei Gasströme (1) in ihrer Verlängerung innerhalb des Sprühturmes (3) schneiden, insbesondere im Zentrum des Sprühturmes bis einen halben Sprühturm-Radius hinter dem Zentrum des Sprühturmes, wobei der Winkel zwischen den Symmetrieachsen der einmündenden Gaskanäle zwischen 45° und 120° beträgt.

5. Sprühturm nach Anspruch 4, **dadurch gekennzeichnet, dass** die Gaskanäle (12) im Bereich vor der Eintrittsöffnung (2) so ausgerichtet sind, dass sich die Symmetrieachsen der einmündenden Gaskanäle innerhalb des Sprühturmes (3) schneiden, insbesondere im Zentrum des Sprühturmes bis einen halben Sprühturm-Radius hinter dem Zentrum des Sprühturmes.

6. Sprühturm nach Anspruch 4 oder 5, **dadurch gekennzeichnet, dass** die Gaskanäle (12) im Bereich vor der Eintrittsöffnung (2) horizontal angeordnet sind.

## Claims

1. Method for contacting gases and liquid droplets for the material and/or heat exchange in a spray tower (3), in which fluid is sprayed in counter to the flow of the gas (1) in a number of levels, the gas being supplied through precisely two inlet openings (2) in the outer covering of the spray tower (3), the flow direction of the gas at the inlet openings (2) being directed into the inner region of the spray tower, which has a diameter of greater than or equal to 12m, in particular greater than 20m, in such a manner that the flow directions of the precisely two gas flows (1) intersect in their extension within the spray tower, in particular in the centre of the spray tower up to half a spray tower radius behind the centre of the spray tower, the angle between the two gas flows at the inlet being between 45° and 120°.

2. Method according to claim 1, **characterised in that** the gas is introduced horizontally.

3. Method according to claim 1 or 2, **characterised in that** the gas is introduced at a velocity between 10 and 25 m/s, in particular between 14 and 16 m/s.

4. Spray tower (3) for contacting gases and liquid droplets for the material and/or heat exchange comprising facilities for spraying in liquid counter to the flow of the gas in a number of levels, precisely two inlet openings (2) in the outer covering of the spray tower to feed in the gas (1) and precisely two gas ducts (12), one gas duct respectively discharging into an inlet opening (2) and the gas ducts (12) leading to the inlet openings (2) being arranged in such a manner that the flow direction of the gas (1) at the inlet opening is directed radially into the inner region of the spray tower (3), which has a diameter greater than or equal to 12m, in particular greater than 20m, specifically that the flow directions of the precisely two gas flows (1) intersect in their extension within the spray tower (3), in particular in the centre of the spray tower up to half a spray tower radius behind the centre of the spray tower, the angle between the axes of symmetry of the discharging gas ducts being between 45° and 120°.

5. Spray tower according to claim 4, **characterised in that** the gas ducts (12) are aligned in the region before the inlet opening (2) so that the axes of symmetry of the discharging gas ducts intersect within the spray tower (3), in particular in the centre of the spray tower up to half a spray tower radius behind the centre of the spray tower.

6. Spray tower according to claim 4 or 5, **characterised in that** the gas ducts (12) are arranged horizontally in the region before the inlet opening (2).

## Revendications

1. Procédé pour mettre en contact des gaz et des gouttes de liquides aux fins de l'échange de matière et/ou thermique dans une colonne de pulvérisation (3) dans laquelle du liquide est injecté à plusieurs niveaux à contre-courant par rapport au gaz (1), le gaz étant amené par exactement deux orifices d'admission (2) ménagés dans la surface latérale de la colonne de pulvérisation (3), le sens de l'écoulement du gaz aux orifices d'admission (2) étant orienté de manière telle vers l'intérieur de la colonne de pulvérisation, qui a un diamètre supérieur ou égal à 12 m, en particulier supérieur à 20 m, que les sens d'écoulement des exactement deux flux de gaz (1) se croisent en leur prolongement à l'intérieur de la colonne de pulvérisation, en particulier au centre de la colonne de pulvérisation jusqu'à un demi-rayon de la colonne de pulvérisation derrière le centre de la colonne de pulvérisation, l'angle entre les deux flux de gaz à l'entrée étant compris entre 45° et 120°.

2. Procédé selon la revendication 1, **caractérisé en ce que** le gaz est introduit horizontalement.

3. Procédé selon la revendication 1 ou 2, **caractérisé en ce que** le gaz est introduit avec une vitesse comprise entre 10 et 25 m/s, en particulier entre 14 et 16 m/s.

4. Colonne de pulvérisation (3) pour mettre en contact des gaz et des gouttes de liquides aux fins de l'échange de matière et/ou thermique, comprenant des dispositifs pour injecter du liquide à plusieurs niveaux à contre-courant par rapport au gaz, exactement deux orifices d'admission (2) ménagés dans la surface latérale de la colonne de pulvérisation pour amener du gaz (1) et exactement deux canaux de gaz (12), respectivement un canal de gaz débouchant dans un orifice d'admission (2) et les canaux de gaz (12) qui mènent aux orifices d'admission (2) étant disposés de manière telle que le sens de l'écoulement du gaz (1) à l'orifice d'admission est orienté radialement vers l'intérieur de la colonne de pulvérisation (3) qui a un diamètre supérieur ou égal à 12 m, en particulier supérieur à 20 m, à savoir de manière telle que les sens d'écoulement des exactement deux flux de gaz (1) se croisent en leur prolongement à l'intérieur de la colonne de pulvérisation (3), en particulier au centre de la colonne de pulvérisation jusqu'à un demi-rayon de la colonne de pulvérisation derrière le centre de la colonne de pulvérisation, l'angle entre les axes de symétrie des canaux de gaz débouchants étant compris entre 45° et 120°.

5. Colonne de pulvérisation selon la revendication 4, **caractérisée en ce que** les canaux de gaz (12) sont orientés de manière telle, dans la zone située devant l'orifice d'admission (2), que les axes de symétrie des canaux de gaz débouchants se croisent à l'intérieur de la colonne de pulvérisation (3), en particulier au centre de la colonne de pulvérisation jusqu'à un demi-rayon de la colonne de pulvérisation derrière le centre de la colonne de pulvérisation.

6. Colonne de pulvérisation selon la revendication 4 ou 5, **caractérisée en ce que** les canaux de gaz (12) sont disposés horizontalement dans la zone située devant l'orifice d'admission (2).
